# EUROPEAN PATENT SPECIFICATION

(11) **EP 2 166 250 B1**
(45) Date of publication and mention of the grant of the patent: **20.11.2013**
(21) Application number: 09011707.8
(22) Date of filing: 14.09.2009
(51) Int. Cl.: F16F 9/06, F16F 9/46, F16F 9/516

(54) **Oleodynamic damper**
Öldynamischer Dämpfer
Amortisseur oléodynamique

(30) Priority: 17.09.2008 IT FI20080178
(43) Date of publication of application: 24.03.2010
(73) Proprietor: Quirini, Stefano, 59100 Prato (IT)
(72) Inventor: Quirini, Stefano, 59100 Prato (IT); Ciolini, David, 51010 Marliana (PT) (IT)
(74) Representative: Barberi, Vittorio

(56) References cited:
- EP-A2- 1 291 548
- GB-A- 2 123 922
- US-A- 4 305 486
- US-A- 4 936 424
- US-A- 5 988 330

## Description

The present invention relates to a hydraulic shock absorber or damper as known from document US 4,305,486 A.

It is known that dampers are used to damp the oscillations, induced by the elastic suspension elements, to which the structure of a vehicle is subjected both for road roughness and for dynamic causes.

It is also known that, in general, a hydraulic damper is essentially made by a cylinder containing oil, that is, a substantially incompressible viscous fluid, and a piston that moves within the cylinder. The piston divides the inner side of the cylinder into two chambers and is provided with holes allowing the passage of oil between said chambers. Said holes are controlled by valves, usually blade valves, The passage of oil through these holes, in the extension and compression stages, determines dissipation of energy that results in the desired damping. To adjust the amount of oil that flows between said chambers in the extension and compression stages, it is necessary to disassemble the shock absorber and at least partly replace the blade valves.

In some type of known dampers the amount of oil flowing between the said chambers can be separately adjusted but the system's response to dynamic stresses and to the stresses induced by road roughness is characterized by significant delays.

The main purpose of the present invention is to propose a shock absorber of the type described above, wherein the system's response, and thus the dampening effect, to compression and extension can be separately adjusted without having to disassemble the shock absorber and without the delays of the known systems.

This result has been achieved, according to the present invention, by adopting the idea of making a device having the features described in claim 1. Other features of the present invention are the subject of the dependent claims.

Thanks to the present invention, it is possible to separately adjust the system response in the stages of compression and extension, with a device which is simple, reliable and cheap in relation to the advantages offered and which requires no disassembly operations for executing said adjustment and provides an almost immediate response.

These and other advantages and characteristics of the present invention will be better understood by any technician in the field from the following description, with the aid of the enclosed drawings, given here simply as a practical example of the invention, but without limiting it in any sense, in which:

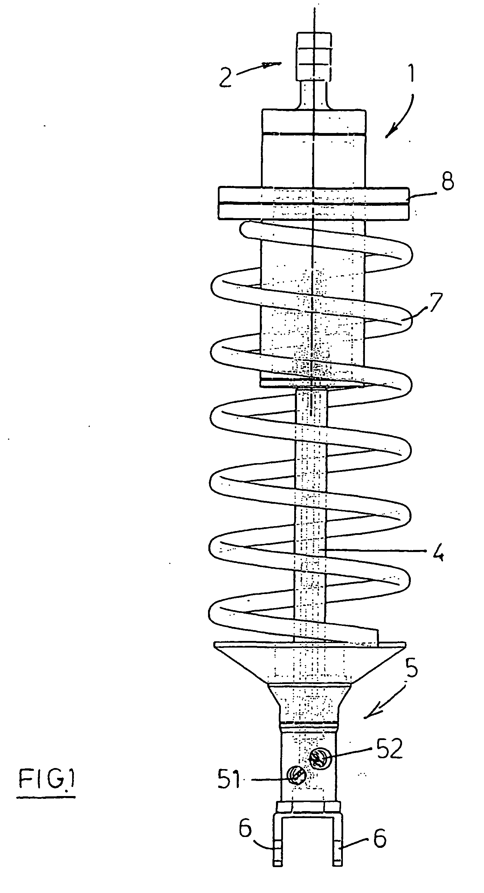

- Fig.1 is a schematic side view of a shock absorber according to the present invention;
- Fig.2 is a schematic longitudinal section view of the shock absorber shown in Fig.1;

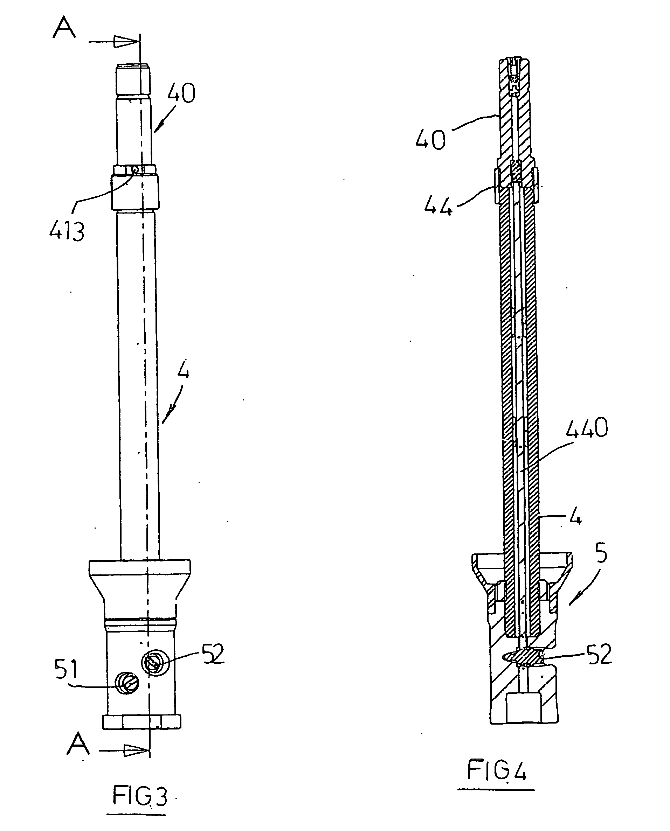

- Fig.3 is a schematic side view of the stem of the shock absorber shown in Fig.1;
- Fig.4 is a sectional view along the line A-A of Fig.3;

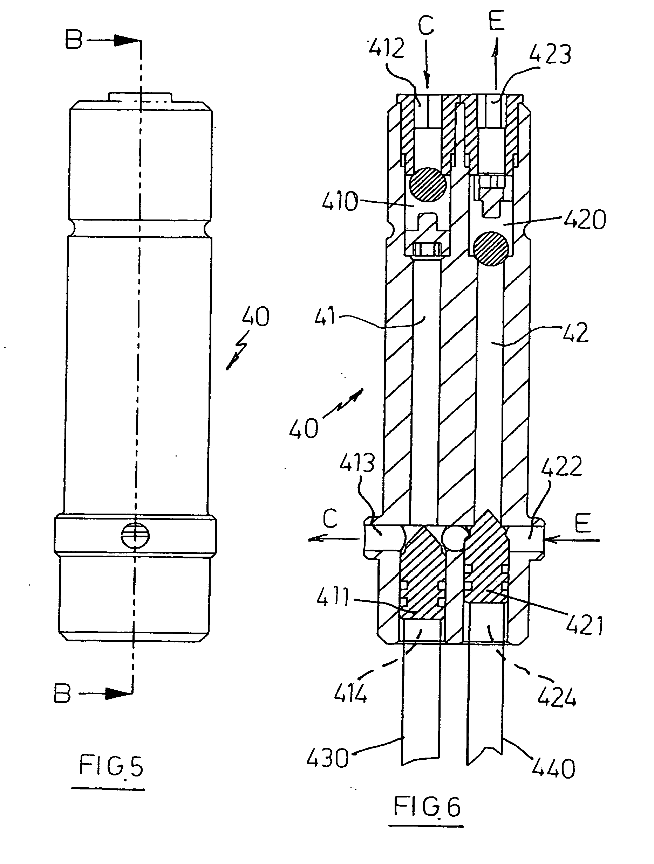

- Fig.5 is a side view of a part of the stem that supports the piston in a shock absorber according to the present invention;
- Fig.6 is a sectional view along the line B-B of Fig.5, wherein also the rods driving the adjustment valves are visible;
- Fig.7 is another longitudinal sectional view of a shock absorber according to the present invention;

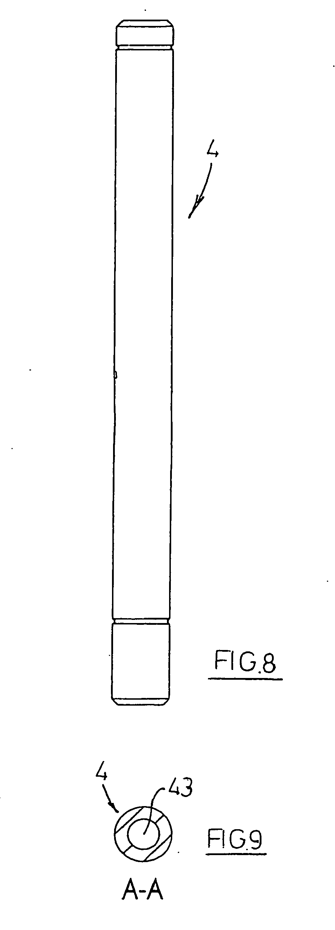

- Figs. 8 and 9 are a side view and a cross-sectional view of the stem.

Reduced to its essential structure and with reference to the attached drawings, a damper or shock absorber according to the present invention comprises:
- a cylinder (1) containing oil, with the upper base exhibiting an eyled (2) for its anchoring to the suspended mass of a vehicle (not shown in the drawings);
- a piston (3) solid with a stem (4) that passes centrally through the lower base of the cylinder (1) and is integral with a foot part (5) provided with eyelets for its anchoring to the unsuspended mass of the vehicle;
- a coil spring (7) positioned between a threaded ring (8) screwed on the outer surface of the cylinder (1) and a support cup (50) provided by the said foot part (5).

The ring (8) allows to adjust the preload of the spring (7).

The piston (3) is mounted on a cylindrical body (40) coaxially mounted on the stem (4) by means of a threaded bush (44). In this way, the piston (3) is made solid to the stem (4) and follows its movements during the vehicle running. In other words, the said body (40) is an extension of the stem (4), to which it is made solid by the threaded bush (44), and the piston (3) is mounted on textensiion (40) of the stem (4).

The said body (40) exhibits two internal passing channels (41, 42) each of which has a portion longitudinally developed in the body (40) and a radial portion. The latter extends across the body (40). The longitudinal portion of each of said channels provided within the body (40) is controlled (on the upper side in the drawings) by a corresponding one-way valve (410, 420), while the radil portion is controlled (on the lower side in the drawings) by an adjustable valve (411, 412) through which it is possible to adjust the opening thereof. In practice, the vertical branch of the channel is controlled (on the upper side of the drawings) by a one-way valve, while the horizontal branch is controlled (on the lower side of the drawings) by a valve whose position can be varied to adjust the respective opening. In according with the example shown in the attached drawings, each of said valves (411, 421) comprises a conical pin positioned in a corresponding hole (414, 424) provided in the lower part of the body (40).

The piston (3) is secured to the body (40) above the radial portions of the channels (41, 42), i.e. in an intermediate position between the inlet sections (412, 422) and the oulet section (413, 423) of the same channels.

The stem (4) has a longitudinal through hole (43) in which two rods (430, 440) are placed. The position of each of said rods (430, 440) is adjustable. For example, such adjustment may be done by means of a conical screw (51, 52) provided in the foot (5) and acting on the lower end of the rod to riase or lower it. In practice, acting on the screw (51) or (52) it is possible to adjust the height position of the rod (430) or (440) within the stem (4). Said scres (51, 52) are independent and, therefore, it is possible to adjust the position of the rod (430) separately and independently from the position of the rod (440).

Since the body (40) is mounted on the stem (4) such that each of said rods (430, 440) is coaxial to a corresponding hole (414, 424) and since each of said pins (411, 412) is on top of a rod (430, 440), acting on the adjustment screws (51, 52) it is possible to adjust the position of the pins (411, 421) and, thereby, the cross section of the channels (41) and (42) through which the oil flows. This adjustment is, as said before, independent and separate for each of said channels (41, 42).

Furthermore, the adjustment screws (51, 52) are provided both on the same side, i.e. on the foot part (5) of the shock absorber.

When the system is compressed (the stem 4, pushed by the feet 5 connected with the unsuspended mass of the vehicle, is lifted) the oil flows downwardly through the valve (410) and the channel (41), whil the flow through the channel (42) is prevented by the valve (420), as schematically indicated by the arrow "C".

Conversely, during extension (the stem 4, pulled down by the foot 5 under the force exterted by the spring 7) th evalve (410) prevents the oil from flowing through the channel (41), while the valve (420) allows the passage of the oil, upwardly, through the channel (42) as indicated by the arrow "E".

Since the oil flow is controlled separately for each of the channels (41, 42), it is possible to adjust the response of the system as desired, both for the compression and for the extension phase.

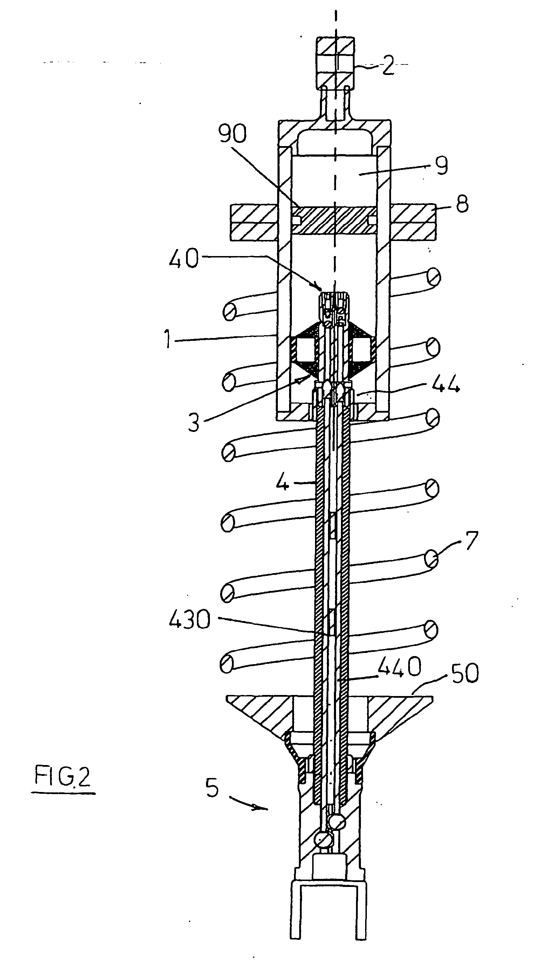

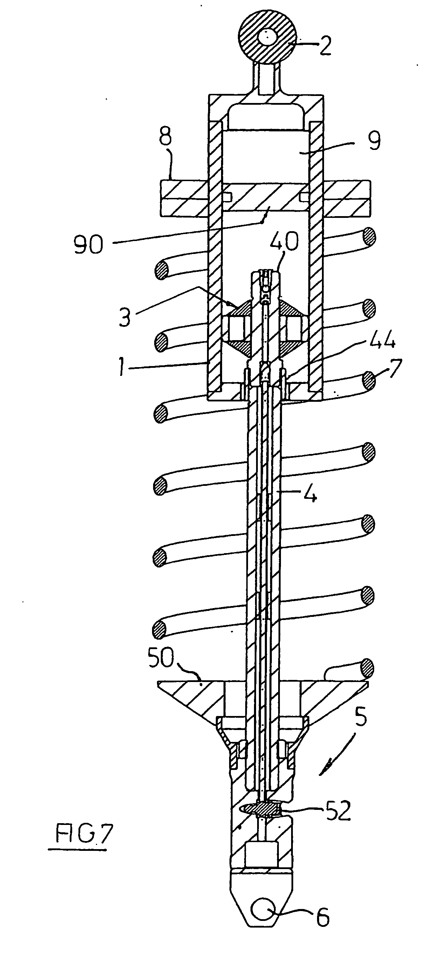

The cylinder (1) may exhibit, as shown in Fig.2 and Fig.7, a gas pressurization or compensation chamber (9) per se known, delimited on top by the upper base of the cylinder (1) and, on the bottom, by a mobile septum (90).

The simplicity of construction and use of the present device are evident from the above description. Also evident is the possibility of regulating the system response always acting on the same zone which, in the described example, is the foot part of the shock absorber.

## Claims

1. Oleodynamic damper comprising a cylinder (1) containing hydraulic oil, a piston (3) which is solid with a stem (4) which passes centrally through the lower base of the cylinder (1) and is solid with a foot (5) of the damper, a spring (7) positioned between a metal ring (8) screwed on the external surface of the cylinder (1) and a support provided by the said foot (5), wherein said piston separates the internal volume of the cylinder (1) into two chambers and is provided with openings for the passage of oil from one of said chambers to the other chamber during the compression and respectively the extension phase, and comprising means for separately adjusting the quantity of oil flowing between said two chambers, **characterised in that** said adjusting means are disposed and acting on a portion (40) of the stem (4) where the piston (3) is supported, and **in that** the piston (3) is mounted on an axial extension (40) of the stem (4), said axial extension (40) being made by a body that features two internal channels (41 ,42), each of said channels having a longitudinal portion and a radial portion, wherein the longitudinal section of each of said channels is controlled by a corresponding unidirectional valve (410,420) while the radial section is controlled by an adjustable valve (411, 421) by means of which it is possible to adjust the respective opening, wherein the piston (3) is fixed on the body (40) above the radial sections of the channels (41,42) that is to say in an intermediate position between the input and output sections (413, 423) of the same channels (41, 42), and in which the input section (412) of a first channel (41) is controlled by a first unidirectional valve (410) and the output section of the first channel (41) is controlled by a first adjustable valve (411) whilst the input section (422) of a second channel (42) is controlled by a second adjustable valve (421) and the output section (423) of the second channel (42) is controlled by a second unidirectional valve (420).

2. Oleodynamic damper according to claim 1 **characterised in that** said adjusting means are operated by means of screws (51,52) provided on a same side of the damper.

3. Oleodynamic damper according to claim 2 **characterised in that** said screws (51,52) are provided in the foot (5) of the damper.

4. Oleodynamic damper according to claim 1 **characterised in that** each of said valves (411,421) consists of a pin provided with a conical tip which is positioned in a corresponding hole (414,424) provided by the lower base of the body (40), that is by a base which is opposite to that in which said unidirectional valves (4 10,420) are positioned.

5. Oleodynamic damper according to one or more previous claims **characterized in that** the stem (4) features a longitudinal passing hole (43) in which two rods (430,440) are positioned, wherein the position of each of said rods (430,440) is adjustable inside the stem (4), and in which each of said rods supports a corresponding adjustable valve (411, 422) on one side and is supported by a corresponding register screw (51,52) on the other side so that, by acting on a register screw (51) or (52), it is possible to adjust the position in height of the rod (430) or (440) inside the stem (4) so as to adjust the position of a corresponding adjustable valve (411) or (422).

## Patentansprüche

1. Dynamischer Öldämpfer, der Folgendes umfasst: einen Zylinder (1), der hydraulisches Öl enthält, einen Kolben (3), der fest mit einem Stößel (4) verbunden ist, der zentral durch die untere Basis des Zylinders (1) hindurch verläuft und fest mit einem Fuß (5) des Dämpfers verbunden ist, eine Feder (7), die zwischen einem Metallring (8), der auf die äußere Oberfläche des Zylinders (1) aufgeschraubt ist, und einem Trager angeordnet ist, der von besagtem Fuß (5) gebildet wird, wobei der Kolben das Innenvolumen des Zylinders (1) in zwei Kammern unterteilt und mit Öffnungen versehen ist, damit während der Kompressions- und der Extensions-Phase Öl von der einen dieser Kammern in die andere Kammer übertreten kann, wobei der Dämpfer Einrichtungen umfasst, die dazu dienen, getrennt die Ölmenge einzustellen, die zwischen den beiden Kammern fließt, **dadurch gekennzeichnet, dass** die Einstelleinrichtungen an einem Teil (40) des Stößels (4) angeordnet sind und dort arbeiten, an welchem der Kolben (3) getragen ist, und dass der Kolben (3) auf einer axialen Verlängerung (40) des Stößels (4) montiert ist, wobei die axiale Verlängerung (40) von einem Körper gebildet wird, der zwei innere Kanäle (41, 42) aufweist, von denen jeder einen Längsteil und einen Radialteil aufweist, wobei der Längsabschnitt eines jeden dieser Kanäle von einem entsprechenden Rückschlagventil (410, 420) kontrolliert wird, während der radiale Abschnitt durch ein einstellbares Ventil (411, 421) kontrolliert wird, mit dessen Hilfe es möglich ist, die betreffende Öffnung einzustellen, wobei der Kolben (3) auf dem Körper (40) oberhalb der radialen Abschnitte der Kanäle (41, 42), d.h. in einer mittleren Stellung zwischen den Eingangs- und Ausgangsabschnitten (413, 423) der besagten Kanäle (41, 42) befestigt ist, und bei dem der Eingangsabschnitt (412) eines ersten Kanals (41) durch ein erstes Rückschlagventil (410) und der Ausgangsabschnitt des ersten Kanals (41) durch ein erstes einstellbares Ventil (411) kontrolliert wird, während der Eingangsabschnitt (422) eines zweiten Kanals (42) durch ein zweites einstellbares Ventil (421) und der Ausgangsabschnitt (423) des zweiten Kanals (42) durch ein zweites Rückschlagventil (420) kontrolliert wird.

2. Dynamischer öldämpfer nach Anspruch 1, **dadurch gekennzeichnet, dass** die Einstelleinrichtungen mit Hilfe von Schrauben (51, 52) betätigt werden, die an der gleichen Seite des Dämpfers vorgesehen sind.

3. Dynamischer Öldämpfer nach Anspruch 2, **dadurch gekennzeichnet, dass** die Schrauben (51, 52) im Fuß (5) des Dämpfers vorgesehen sind.

4. Dynamischer Öldämpfer nach Anspruch 1, **dadurch gekennzeichnet, dass** jedes der Ventile (411, 421) aus einem Stift besteht, der mit einer konischen Spitze versehen ist, die in einem entsprechenden Loch (414, 424) positioniert ist, das in der unteren Basis des Körpers (40), d.h. in der Basis vorgesehen ist, die derjenigen Basis gegenüberliegt, in der die Rückschlagventile (410, 420) positioniert sind.

5. Dynamischer Öldämpfer nach einem oder mehreren der vorhergehenden Ansprüche, **dadurch gekennzeichnet, dass** der Stößel (4) eine sich in Längsrichtung erstreckende Bohrung (43) aufweist, in der zwei Stäbe (430, 440) positioniert sind, wobei die Position eines jeden dieser Stäbe (430, 440) innerhalb des Stößels (4) einstellbar ist, und wobei jeder der Stäbe ein entsprechendes einstellbares Ventil (411, 422) auf der einen Seite trägt und durch eine entsprechende Einstellschraube (51, 52) an der anderen Seite so getragen ist, dass es dadurch, dass die Einstellschraube (51) oder (52) betätigt wird, die Höhenposition des Stabes (430) oder (440) innerhalb des Stößels (4) eingestellt werden kann, um so die Position eines entsprechenden einstellbaren Ventils (411) oder (422) einzustellen.

## Revendications

1. Amortisseur hydraulique, comprenant un cylindre (1) contenant huile hydraulique, un piston (3) solidaire à une tige (4) qui passe au centre à travers la base inférieure du cylindre (1) et est solidaire à un pied (5) de l'amortisseur, un ressort (7) positionné entre un écrou annulaire (8) vissé sur la surface externe du cylindre (1) et un appui offerte par le pied (5), où ledit piston (3) sépare le volume interne du cylindre (1) en deux chambres et il est muni de ouvertures pour permettre à l'huile de passer de l'un à l'autre desdites chambres pendant la compression et l'extension respectivement, et comprenant des moyens pour régler séparément la quantité d'huile qui passe entre lesdites deux chambres, **caractérisé en ce que** lesdits moyens de réglage sont positionnés et agissant en correspondance d'une partie (40) de la tige (4) où le piston (3) est supporté et par le fait que le piston (3) est monté sur un prolongement axial (40) de la tige (4), ledit prolongement axial (40) étant constitué par un corps qui présente deux canaux internes (41, 42) dont chacun présente une partie longitudinale et une partie radiale, où la partie longitudinale de chacun desdits canaux est commandé par une vanne unidirectionnelle correspondante (410, 420), tandis que la partie radiale est commandée par une vanne réglable (411, 421) au moyen de laquelle il est possible d'ajuster l'ouverture correspondante, où le piston (3) est fixé sur le corps (40) au-dessus des parties radiales des canaux (41, 42) c'est à dire dans une position intermédiaire entre les sections d'entrée et de sortie (413 , 423) des mêmes canaux (41, 42), et où la section d'entrée (412) d'un premier canal (41) est contrôlée par une première vanne unidirectionnelle (410) et la section de sortie du premier canal (41) est contrôlée par une première vanne réglable (411), tandis que la section d'entrée (422) d'un deuxième canal (42) est contrôlée par une deuxième vanne réglable (421) et la section de sortie (420) du deuxième canal (42) est contrôlée par une deuxième vanne unidirectionnelle (420).

2. Amortisseur hydraulique selon la revendication 1, **caractérisé en ce que** lesdits moyens de réglage sont commandés par des vis (51, 52) prévues dans un même côté de l'amortisseur.

3. Amortisseur hydraulique selon la revendication 2, **caractérisé en ce que** lesdites vis (51, 52) sont prévues dans le pied (5) de l'amortisseur.

4. Amortisseur hydraulique selon revendication 1 **caractérisé en ce que** chacune desdites vannes (411, 421) est constitué par un pin ayant une extrémité conique positionnée dans une ouverture correspondante (414, 424) formée dans la base inférieure du corps (40), c'est à dire dans une base opposée à celle dans laquelle sont positionnées lesdites vannes unidirectionnelles (410, 420).

5. Amortisseur hydraulique selon une ou plusieurs des revendications précédentes, **caractérisé en ce que** la tige (4) présente un trou longitudinale (43) dans lequel sont placées deux tiges (430, 440), où la position de chacune desdites tiges (430, 440) à l'intérieur de la tige (4) est réglable, et où chacune desdites tiges supporte d'une part une vanne réglable correspondante (411, 422) et à l'autre côté est supportée par une vis de réglage correspondante (51, 52), de sorte que, en agissant sur une vis de réglage (51) ou (52) on règle la position en hauteur de la tige (430) ou (440) à l'intérieur de la tige (4) et ainsi on règle la position d'une vanne réglable correspondante (411) ou (422).
